# EUROPEAN PATENT SPECIFICATION

(11) **EP 0 693 539 B1**
(45) Date of publication and mention of the grant of the patent: **27.09.2006**
(21) Application number: 95111105.3
(22) Date of filing: 14.07.1995
(51) Int. Cl.: C09C 1/48, C10J 3/02, C10J 3/58, C10J 3/16, C09C 1/44

(54) **Combustion of organic wastes**
Verbrennung von organischen Abfällen
Combustion de déchets organiques

(30) Priority: 20.07.1994 JP 16806194; 11.10.1994 JP 24502894; 01.12.1994 JP 29818794; 01.12.1994 JP 29818894; 01.12.1994 JP 29818994; 27.01.1995 JP 1119195
(43) Date of publication of application: 24.01.1996
(60) Divisional application: 01126575.8
(73) Proprietor: MITSUBISHI JUKOGYO KABUSHIKI KAISHA, Tokyo 100 (JP)
(72) Inventor: Arima, Kenichi, c/o Nagasaki Res. & Dev. Center, 5-chome, Nagasaki-shi, Nagasaki-ken (JP); Soda, Masahiro, c/o Nagasaki Res. & Dev. Center, 5-chome, Nagasaki-shi, Nagasaki-ken (JP); Yamamoto, Hisao, c/o Choryo Engineering K.K., Nagasaki-shi, Nagasaki-ken (JP); Sakai, Masayasu, c/o Choryo Engineering K.K., Nagasaki-shi, Nagasaki-ken (JP); Ohta, Hideaki, c/o Nagasaki Res. & Dev. Center, 5-chome, Nagasaki-shi, Nagasaki-ken (JP); Fujioka, Yuichi, c/o Nagasaki Res. & Dev. Center, 5-chome, Nagasaki-shi, Nagasaki-ken (JP)
(74) Representative: Behrens, Dieter

(56) References cited:
- EP-A- 0 554 688
- DE-A- 2 520 492
- DE-A- 2 622 266
- DE-A- 3 337 992
- DE-A- 3 709 225
- DE-A- 3 843 926
- GB-A- 1 435 089
- US-A- 4 171 345
- DATABASE WPI Week 8451 Derwent Publications Ltd., London, GB; AN 84-316400 XP002047948 & JP 59 199 772 A (HUMIMURO Y.) , 12 November 1984
- DATABASE WPI Week 8113 Derwent Publications Ltd., London, GB; AN 81-22825d XP002047949 & SU 747 868 A (YAROSL TECH. CARBON) , 15 July 1980

## Description

The present invention generally relates to combustion of organic wastes, such as scrap tires and waste plastics. More specifically, the invention relates to a method for producing carbon black using scrap tires and other organic waste, such as waste plastics, as raw material.

Conventionally, organic waste such as scrap tires and waste plastics has been directly incinerated only for the purpose of generating steam by means of a heat exchanger and utilizing the steam as a heat source.

When scrap tires are taken as an example of organic waste, they are composed of 50-60% of volatiles, 20-30% of fixed carbon, and 10-15% of inorganic matter such as steel and ash, as shown in Table 1. Since scrap tires include steel wires, it is difficult to crush them into small pieces. Accordingly, it has been conventional practice to burn whole scrap tires in a stoker or kiln or to crush scrap tires to about 10 cm cubes and burn them in a stoker or kiln. However, these combustion methods involve the following problems:
(1) If scrap tires are burned with the aid of air, volatiles present therein decompose and burn rapidly. As a result, a high temperature of 1,500°C or above is attained locally, tending to cause damage to the furnace. Moreover, large amounts of soot and tar are produced from the flame, requiring after-treatment.
(2) Fixed carbon has such a low burning rate that it may form a residue in admixture with inorganic matter. This residue is not easy to dispose of.

For these reasons, it is difficult to dispose of organic waste such as scrap tires. In the present state of the art, it has been impossible to reclaim resources from such waste. Table 1: Composition of tires

| Component | | Content (%) |
|---|---|---|
| Volatiles | Raw rubber | 40-50 |
| | Oil | 5-10 |
| Fixed carbon | | 20-30 |
| Steel & ash | | 10-15 |

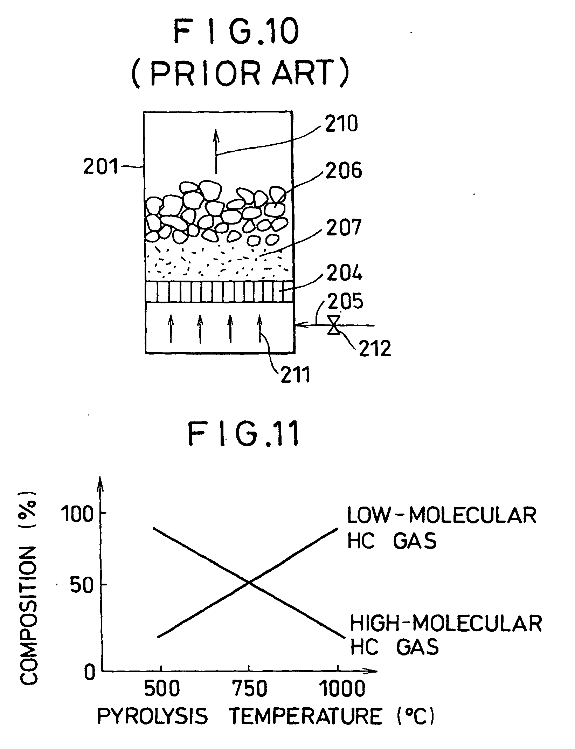

An example of a conventional fixed-bed gasification furnace for gasifying organic waste such as scrap tires and waste plastics is illustrated in Fig. 10. In the fixed-bed gasification furnace 201 of Fig. 10, volatiles present in organic waste 206 fed from above are pyrolyzed and gasified by the heat evolved as a result of the partial combustion of fixed carbon present in the underlying residue, thus yielding a residue 207 consisting largely of fixed carbon. The fixed carbon present in residue 207 is partially burned and gasified with a gasifying agent 211 which is a mixture of an oxygen-containing gas and steam and which is supplied to a space below a perforated plate 204 through a valve 212, and the fixed carbon serves to supply the heat required to pyrolyze the volatiles. The gas produced by the pyrolysis and gasification of volatiles and the gas produced by the gasification of fixed carbon are mixed together and withdrawn as an organic waste-gasified gas 210. The reactions occurring during this process are represented by the following equations (1), (2) and (3).

C + O₂ ---> CO + CO₂ + Q₁ (exothermic) (1)

(Supply of the heat of reaction by the partial
combustion and gasification of fixed carbon)

C + H₂O ---> CO + H₂ -Q₃ (endothermic) (2)

(Gasification by the reaction of fixed carbon with steam)

CₙHₘ ---> Cₙ₁Hₘ₁ - Q₂ (endothermic) (3)

(n > n1, m > m1)

### (Pyrolysis and gasification of volatiles)

If the pyrolysis temperature of volatiles is high (e.g., 700°C or above), C-C bonds are severed extensively, so that a low-molecular hydrocarbon gas consisting of low-molecular components such as methane (CH₄), ethane (C₂H₆) and ethylene (C₂H₄) are produced in high proportions. On the other hand, if the pyrolysis temperature is low (e.g., 500-700°C), a high-molecular hydrocarbon gas containing aromatic compounds such as benzene (C₆H₆), toluene (C₇H₈) and naphthalene (C₁₀H₈) is produced. This situation is schematically shown in Fig. 11.

When a gas obtained by the gasification of organic waste is used as the raw material for the formation of carbon black, the gas produced in the gasification furnace is introduced into a combustion furnace for the formation of carbon black, and burned in a low-oxygen environment to form carbon black. During this process, a gas consisting of low-molecular components is predominantly burned by reaction with oxygen, creating a high-temperature field. In this high-temperature field, a high-molecular hydrocarbon gas undergoes dehydrogenation and polycondensation repeatedly and thereby grows to form carbon black. That is, in order to enhance the yield of carbon black, it is preferable to increase the content of high-molecular components, such as naphthalene (C₁₀H₈) and anthracene (C₁₄H₁₀), in the gas obtained by the gasification of organic waste. To this end, it is preferable to carry out the pyrolysis of volatiles at a temperature of 500-700°C.

If the pyrolysis temperature is higher than 700°C, C-C bonds present in volatiles will be severed extensively to produce low-molecular hydrocarbons, such as methane (CH₄), ethane (C₂H₆) and ethylene (C₂H₄). If it is lower than 500°C, the pyrolysis will not proceed satisfactorily.

Usually, the quantity of heat required to pyrolyze and gasify volatiles at a temperature of 500-700°C will be only about 5-10% of the total quantity of heat possessed by organic waste. Where the content of fixed carbon in organic waste is high (e.g., 20%), the combustion of all fixed carbon will evolve an excessive quantity of heat.

Thus, where it is desired to produce a high-molecular hydrocarbon gas from volatiles in the gasification of organic waste, the following problems arise. They make it difficult to control the pyrolysis temperature of volatiles so as to remain in an appropriate range.
(1) If the feed rate of oxygen is reduced to decrease the amount of fixed carbon undergoing partial combustion (i.e., the heat of combustion, Q₁, of fixed carbon) and thereby lower the pyrolysis temperature, a residue containing fixed carbon is left. This residue is not easy to dispose of.
(2) Contrary, if fixed carbon is partially burned at a sufficiently high feed rate of oxygen so as not to leave any residual fixed carbon, the heat of combustion is increased to raise the pyrolysis temperature. As a result, a high-molecular hydrocarbon gas cannot be obtained.
(3) The reaction temperature can be lowered by adding steam to the gasifying agent. However, if the feed rate of steam is raised to increase the quantity of heat (Q₃) absorbed by the reaction of fixed carbon with steam, fixed carbon and unreacted steam react with the high-molecular hydrocarbon gas produced by the pyrolysis of volatiles, resulting in the formation of low-molecular hydrocarbons.

   Cₙ₁Hₘ₁ + H₂O ---> Cₙ₂Hₘ₂ + CO + H₂ - Q₄ (4)

   (n1 > n2, m1 > m2)

Furthermore, as noted above, a proper temperature control is required to obtain a gas having a composition suitable for use as the raw material for the production of carbon black. In conventional fixed-bed gasification furnaces, the feed rate of the whole gasifying agent is usually controlled in response to the height of the organic waste layer within the furnace and this involves the following problems.

If the feed rate of organic waste varies, the resulting change in the feed rate of the gasifying agent is delayed because of the time lag of the change in the height of the organic waste layer. This causes the gasifying agent/organic waste ratio to become unbalanced. As a result, the supply of heat by the partial combustion and gasification of fixed carbon according to the above equations (1) and (2) also becomes unbalanced, so that the internal temperature of the gasification furnace may be fluctuated. Thus, the pyrolysis temperature of volatiles depending on equation (3) may be fluctuated to depart from its appropriate range. That is, if the feed rate of organic waste decreases, the gasifying agent/organic waste ratio temporarily becomes unduly high, resulting a rise in pyrolysis temperature. Contrarily, if the feed rate of organic waste increases, the gasifying agent/organic waste ratio temporarily becomes unduly low, resulting a reduction in pyrolysis temperature. Consequently, the properties of the resulting organic waste-gasified gas are fluctuated, bringing about unstable operation of the succeeding process (such as carbon black production process) using that gas.

Also, in order to hold down the pyrolysis temperature of volatiles, the partial combustion/gasification temperature of fixed carbon needs to be held down. Since the reaction rate of fixed carbon is reduced thereby, the organic waste layer becomes thick, requiring a large-sized fixed-bed gasification furnace.

Another process for the production of carbon black in a gasification process from scrap tires and waste is described in EP 0 554 688 A1. The produced carbon monoxide-containing synthesis gas is used as such or after enrichment of the carbon monoxide by 0 to 100% enrichment in a carbon black producing system. The process consists essentially of burning and gasifying the waste material in a gaseous mixture of air (oxygen) and steam with an under-stoichiometric ratio of oxygen for combustion generally under very high temperatures of 1300 -1600 °C for the generation of CO and H₂ and of CO₂ and H₂O. It may also be introduced into a carbon black generator after enrichment with CO since low molecular weight gas (such as CO and CO₂) and low-molecular weight hydrocarbons, if obtained from the organic waste, are inefficient in the production of carbon black. The synthesis gas may firstly be used for steam generation (thereby lowering the temperature). After separation of dust and H₂S and CO₂ it may be further cooled by quenching with water. High quality carbon black is recovered having high thermal and electrical conductivity.

An object of the invention is to provide a process for the production of carbon black from organic waste such as scrap tires with easy operation and with high efficiency and, moreover, allow the organic waste to be converted into a resource and reused as a raw material for the manufacture of valuable carbon black.

The object of the invention is achieved by the methods which are defined in appended claims 1 and 2.

According to claims 1 invention, the gasification reactions occur in the partial combustion and gasification of organic waste in a gaseous mixture of an oxygen-containing gas and steam with an equivalent ratio of oxygen to carbon being 1 or less, particularly 0.1 to 0.5, at a temperature of 500 to 1000°C. The gasification reactions are represented by the following equations (5) to (9).

The volatiles and fixed carbon are partially burned by reaction with oxygen, and the heat so evolved cause the pyrolysis of the volatiles. In addition, the volatiles are converted into low-molecular compounds by reaction with the steam, and fixed carbon is gasified by reaction with steam. The temperature for these partial combustion and gasification is preferably in the range of 500 to 1,000°C. If the temperature is lower than 500°C, the pyrolysis reaction of volatiles according to equation (3) will not proceed satisfactorily. If it is higher than 1 000°C, the reactions (5) and (7) occur rapidly and a portion of the pyrolyzed volatiles (Cₙ₁Hₘ₁) undergo polycondensation in the oxygen-deficient environment to form tar and soot.

Also, if the combustion takes place only in air the combustion temperature becomes high because of the lack of steam, and a part of decomposed volatiles (Cₙ₁Hₘ₁) undergo polycondensation to produce tar and soot.

CₙHₘ + O₂ ---> Cₙ₁Hₘ₁ + CO + CO₂ + H₂ + H₂O + Q₁ (5)

(Exothermic reaction by the partial combustion of
volatiles)

C + O₂ ---> CO + CO₂ + Q₂ (6)

(Exothermic reaction by the partial combustion of
fixed carbon)

CₙHₘ ---> Cₙ₁Hₘ₁ - Q₃ (n>n1) (7)

(Pyrolysis of volatiles, endothermic reaction)

CₙHₘ + H₂O ---> Cₙ₁Hₘ₁ + CO + H₂ - Q₄ (n>n1) (8)

(Conversion of volatiles into low-molecular compounds
by reaction with steam, endothermic reaction)

C + H₂O ---> CO + H₂ - Q₅ (9)

(Gasification of fixed carbon by reaction with steam,
endothermic reaction)

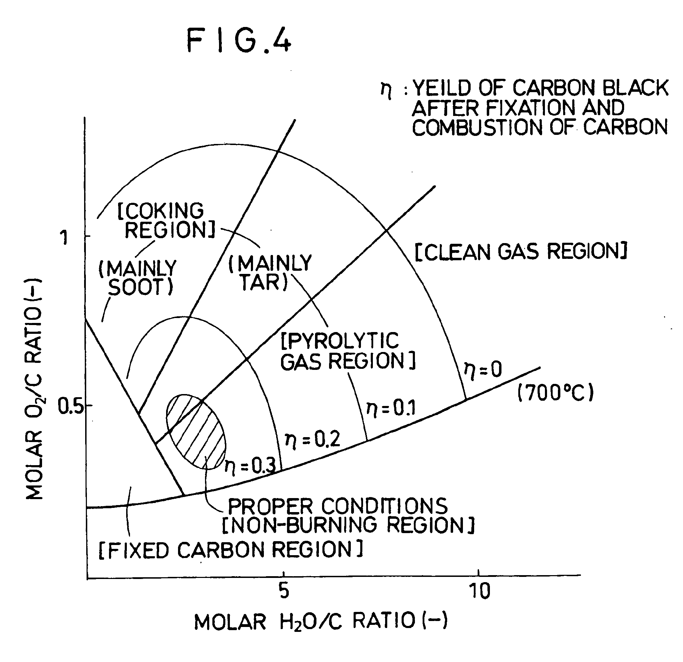

In the above-described reactions, the gasification temperature and the composition of the resulting combustible gas can be controlled by varying the feed rates of oxygen and steam. Fig. 4 shows the relationship between the proportions of supplied oxygen and steam to carbon and the reaction characteristics in the gasification of scrap tires at 700°C. In Fig. 4, the molar ratios of O₂ (oxygen) to C (carbon) and H₂O (steam) to C present in organic waste are plotted as ordinate and abscissa, respectively. As shown in Fig. 4, the gasification reactions are divided into five regions having different reaction patterns according to the proportions of O₂ and H₂O.
(1) Non-burning region: In this region, combustion cannot be sustained owing to a shortage of O₂.
(2) Fixed carbon-remaining region: More O₂ than in region (1) is present and combustion is sustained. However, O₂ is still insufficient and H₂O is also scarce, so that some carbon remains unburned.
(3) Pyrolytic gas region: H₂O is increased as compared with region (2) and no carbon is left unburned. However, hydrocarbons are not yet converted into low-molecular compounds.
(4) Clean gas region: This is a region in which more H₂O than in region (3) is present. Hydrocarbons are converted into low molecular compounds such as CO, H₂ and CH₄.
(5) Coking region: This is a region in which O₂ is increased as compared with regions (3) and (4). The combustion temperature is elevated locally and rapidly pyrolyzed hydrocarbons undergo mutual polycondensation (coking) to form tar and soot.

In the present invention, it is necessary to produce large amounts of high-molecular hydrocarbons for the purpose of obtaining carbon black in high yield. The preferred conditions for this purpose (i.e., an equivalent ratio of oxygen to carbon of 0.3-0.5, and a steam equivalent ratio of about 2-3 in this example) are represented by the hatched area in Fig. 4.

The pyrolysis reaction occurring in the pyrolysis and gasification of organic waste at a temperature of 500°C or above in an oxygen-free environment according to claim 2 is represented by the following equation (10).

The appropriate temperature for pyrolysis is 500°C or above and preferably in the range of 500 to 900°C. If the temperature is lower than 500°C, pyrolysis will not proceed satisfactorily, while if it is higher than 900°C, the resulting gas will consist of low-molecular components, resulting in a reduced yield of carbon black.

CₙHₘ ---> Cₙ₁Hₘ₁ - Q₆ (n>n1) (10)

(Pyrolysis of volatiles, endothermic reaction)

In the processes of the present invention, the combustible gas obtained in the above-described manner (i.e., either by the partial combustion and gasification of organic waste in a gaseous mixture of an oxygen-containing gas and steam with an equivalent ratio of oxygen to carbon being 1 or less or by the pyrolysis and gasification of organic waste at a temperature of 500°C or above in an oxygen-free environment) is burned in an oxygen-deficient environment containing less than a stoichiometric amount of oxygen required for combustion. Since any coarse particles present in this combustible gas may degrade the quality of carbon black, it is preferable to remove them by means of a cyclone or the like.

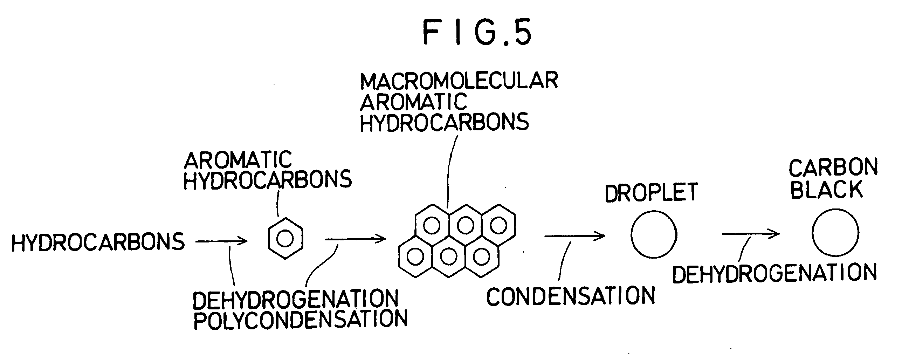

The reactions occurring in this step are represented by the following equations (11) to (14). The combustible gas is partially burned to create a high-temperature field at 1000°C or above. In this high-temperature field, hydrocarbons are dehydrogenated and then mutually polycondensed owing to a shortage of oxygen. Thus, as shown in Fig. 5, hydrocarbons are converted into aromatics and then macromolecular aromatics, which condense into droplets and finally form carbon black particles.

During this process, the dehydrogenation reaction rate of hydrocarbons can be enhanced by attaining a temperature of 1 000°C or above, preferably 1 000 to 2 000°C. As a result, the diffusion of oxygen becomes insufficient and the proportion of mutually polycondensed hydrocarbons is increased, resulting in an enhanced yield of carbon black. The temperature seldom exceeds 2 000°C in the case of combustion in such low-oxygen conditions.

On the other hand, if the temperature is low, the proportion of hydrocarbons reacting with diffusing oxygen is increased, resulting in a reduced yield of carbon black. Moreover, the dehydrogenation reaction does not proceed satisfactorily, so that carbon black of high quality cannot be obtained.

CO + O₂ ---> CO₂ + Q₇ (11)

H₂ + O₂ ---> H₂O + Q₈ (12)

Cₙ₁Hₘ₁ + O₂ ---> CO + CO₂ + H₂ + H₂O + Q₉ (13)

(Exothermic reaction by the partial combustion of
combustible gases)

Cₙ₁Hₘ₁ ---> C + H₂ - Q₁₀ (14)

(Formation of carbon black by the dehydrogenation
and polycondensation of hydrocarbons)

Then, the reactions for the conversion of hydrocarbons into carbon black are stopped by instantaneously quenching the resulting partial combustion gas having a temperature of 1000°C or above to a temperature of 700°C or below, preferably 200 to 700°C, in an inert atmosphere. If the partial combustion gas is cooled slowly, carbon black having different properties is formed at various temperatures in the course of the cooling, so that carbon black having uniform properties cannot be obtained. As the means of quenching, it is preferable to use water or an inert gas such as nitrogen which also may serve as a means for keeping the partial combustion gas in an inert atmosphere. The particle size, hydrogen content and other properties of carbon black can be controlled by regulating the timing of quenching. The preferred particle size range of carbon black is from 20 to 100 nm and the preferred hydrogen content range thereof is from about 0.3 to 0.5%. If the quenching temperature is less than 200°C, the dew point of any SOₓ present in the partial combustion gas is reached, so that the recovery of carbon black becomes difficult.

Thereafter, carbon black can be obtained by separating and collecting it from the carbon black-containing reaction gas.

The carbon black produced in the above-described manner has a small particle size and a low bulk density (0.1 g/cm³ or less). If desired, its bulk density may be increased by granulating the carbon black with a wet granulator or the like and then drying it.

The invention makes it possible to produce valuable carbon black from organic waste such as scrap tires which has conventionally been incinerated only for the purpose of utilizing the heat evolved by its combustion as a heat source. Moreover, although scrap tires and the like have had the disadvantage of requiring troublesome operations for their disposal, the processes of the present invention facilitate the disposal of such organic waste. The systems according to the invention enable the above-described processes to be carried out effectively.
Fig. 1 is a block diagram illustrating a first preferred embodiment of the system of the present invention;
Fig. 2 is a block diagram illustrating a second preferred embodiment of the system of the invention;
Fig. 3 is a block diagram illustrating a third preferred embodiment of the system of the invention;
Fig. 4 is a graph showing the relationship between the proportions of supplied oxygen and steam to carbon and the reaction characteristics in the gasification of scrap tires at 700°C;
Fig. 5 is a schematic diagram illustrating the mechanism of formation of carbon black;
Fig. 6 is a schematic view illustrating a basic testing system for carrying out the processes of the invention;
Fig. 7 is a schematic diagram illustrating a first exemplary carbon black production process in accordance with the invention;
Fig. 8 is a schematic diagram illustrating a second exemplary carbon black production process in accordance with the invention;
Fig. 9 is a schematic diagram illustrating a third exemplary carbon black production process in accordance with the invention;
Fig. 10 is a schematic representation of an example of a conventional furnace for the gasification of organic waste; and
Fig. 11 is a graph schematically showing the relationship between the pyrolysis temperature of organic waste and the composition of the gas so produced.

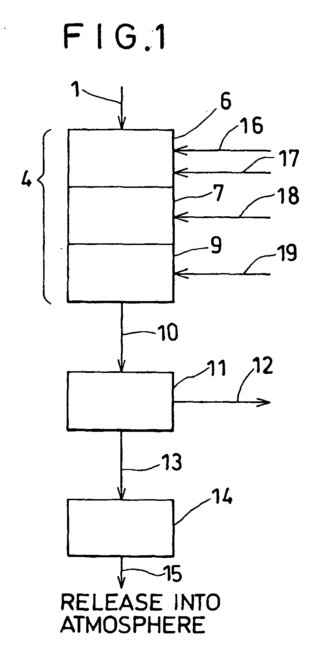

In the embodiment of Fig. 1, a gasification/combustion furnace 4 is formed by uniting a gasification section 6 constituting a means of gasification, a combustion section 7 functioning as a combustion furnace, and a quenching section 9 constituting a means of quenching. When organic waste such as scrap tires is fed to this gasification and combustion furnace 4, it is partially burned and gasified under the condition that the equivalent ratio of oxygen is 1 or less in gasification section 6 to which an oxygen-containing gas 16, such as air, oxygen-enriched air or oxygen, and steam 17 are supplied.

In the succeeding combustion section 7 to which an oxygen-containing gas 18, such as air, oxygen-enriched air or oxygen, is supplied, the combustible gas produced in gasification section 6 is partially burned at a temperature of 1 000°C or above in an oxygen-deficient environment containing less than a stoichiometric amount of oxygen. The resulting partial combustion gas having a temperature of 1 000°C or above is quenched in quenching section 9 by the addition of water or nitrogen 19 so as to stop the reactions.

The carbon black-containing combustion gas 10 thus obtained is introduced into a collector, such as bag filter 11, where carbon black 12 is collected. The collected carbon black 12 is suitably granulated and dried to yield a product.

On the other hand, combustion exhaust gas 13 from which carbon black 13 has been separated is subjected to pollution control treatments, such as desulfurization, denitration and dust removal, in an exhaust gas treating apparatus 14 and discharged into the atmosphere as a treated exhaust gas 15.

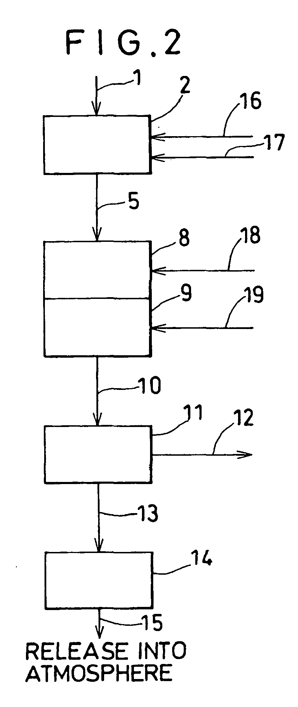

In the embodiment of Fig. 2, a gasification furnace 2 serving as a means of gasification is installed independently. The combustible gas 5 obtained by effecting therein the same reaction as in the gasification section 6 of Fig. 1 is introduced into a combustion furnace 8 coupled with a quenching section 9, where it is partially burned and then quenched. The flow after quenching section 9 is the same as in the embodiment of Fig. 1.

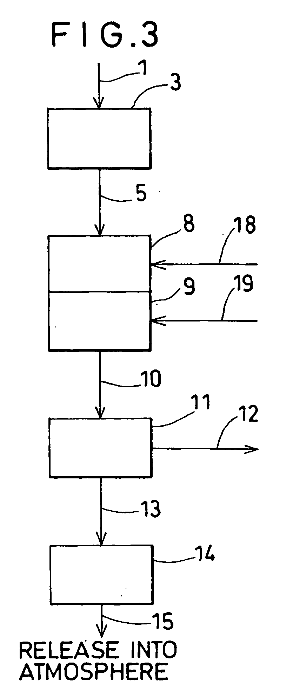

In the embodiment of Fig. 3, a pyrolysis furnace 3 is installed in place of the gasification furnace 2 employed in the embodiment of Fig. 2. Thus, organic waste 1 is pyrolyzed and gasified at a temperature of 500°C or above in an oxygen-free environment to obtain a combustible gas (or pyrolytic gas) 5. The flow after combustion furnace 8 is the same as in the embodiment of Fig. 2.

In the embodiments of Figs. 1-3, gasification furnace 2, pyrolysis furnace 3 and gasification/combustion furnace 4 are equipped with a means for the separation of ash (or pyrolytic residue). If necessary, a dust removal device may be installed prior to the introduction of the combustible gas produced by gasification or pyrolysis into the combustion furnace.

Furthermore, combustible components are still contained in the combustion exhaust gas 13 from which carbon black 12 has been separated. If desired, therefore, combustion exhaust gas 13 may be introduced into a boiler where it is burned to generate steam for purposes of heat recovery. This steam can also be utilized in the gasification of organic waste.

The present invention will now be explained in more details with reference to the following examples.

### (Example 1)

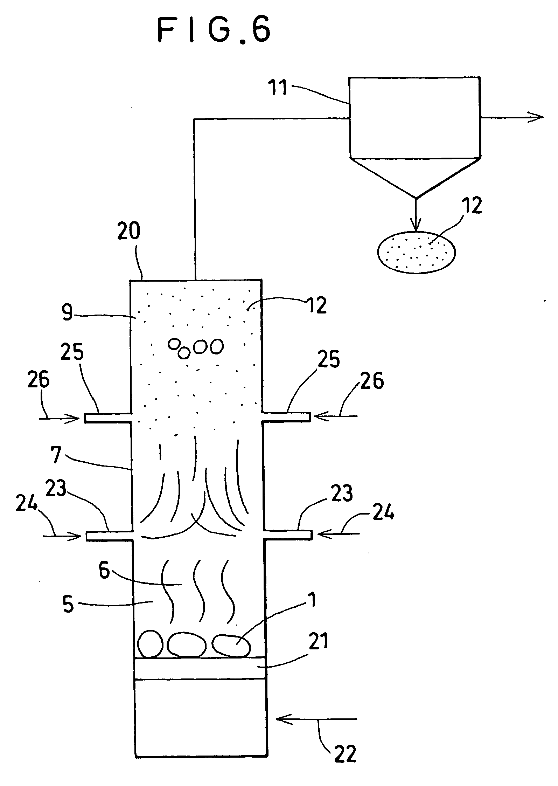

Fig. 6 is a schematic view illustrating a basic testing system for the production of carbon black from organic waste. This system consists of a main test apparatus 20 having a gasification section 6, a combustion section 7 and a quenching section 9, and a collector 11. In the operation of this system, organic waste 1 is first placed on a fire grate 21 in gasification section 6 and gasified (1) by supplying, from the underside of fire grate 21, a gasifying agent 22 comprising a mixture of air, oxygen and steam in any desired proportions and preheated to any desired temperature up to 700°C or (2) by supplying, from the underside of fire grate 21, a gasifying agent 22 comprising nitrogen gas or the like and preheated to a temperature of 500°C or above.

In combustion section 7, the combustible gas 5 so produced is burned in an oxygen-deficient environment by supplying a burning gas 24 comprising a mixture of air and oxygen in any desired proportions through a nozzle 23. Then, the resulting combustion gas is quenched in quenching section 9 by introducing nitrogen gas 26 through a nozzle 25. The carbon black-containing combustion gas thus obtained is introduced into a collector 11, such as bag filter, where carbon black is separated and collected. The compositions and temperatures of gasifying agent 22 and burning gas 24 may be suitably controlled according to the properties of organic waste 1.

The processes for producing carbon black in the above- described system by using scrap tires as the organic waste are more specifically described below.

### (Gasification section)

(1) Scrap tires, which have been crushed to about 1 cm cubic chips, are charged onto fire grate 21 at a feed rate of 5 kg per hour. On the other hand, a gasifying agent 22 comprising a 1:1 mixture of air and steam and preheated to 700°C is supplied at a feed rate of 50 N liters per minute. Thus, all of the scrap tires are gasified except for steel and ash.
(2) Scrap tires, which have been crushed to about 1 cm cubic chips, are charged onto fire grate 21 at a feed rate of 5 kg per hour. On the other hand, nitrogen gas preheated to 700°C is supplied at a feed rate of 50 N liters per minute. Thus, volatiles such as raw rubber and oil are pyrolyzed and gasified.

### (Combustion section)

The combustible gas 5 obtained in the above step (1) or (2) is partially burned at a temperature of 1,000°C or above with the aid of a burning gas 24 comprising a 1:1 mixture of air and oxygen which is supplied through nozzles 23 above the fire grate at a feed rate of 10 N liters per minute.

### (Quenching section)

The combustion gas from the combustion section is quenched to 700°C or below by supplying nitrogen gas thereto through nozzle 25 at a flow rate of 50 N liters per minute. Thus, there is obtained a combustion gas containing carbon black.

### (Collector)

The above combustion gas containing carbon black is introduced into the collector (or bag filter) where carbon black is separated and collected. The yield of carbon black is about 1 kg per hour.

### (Example 2)

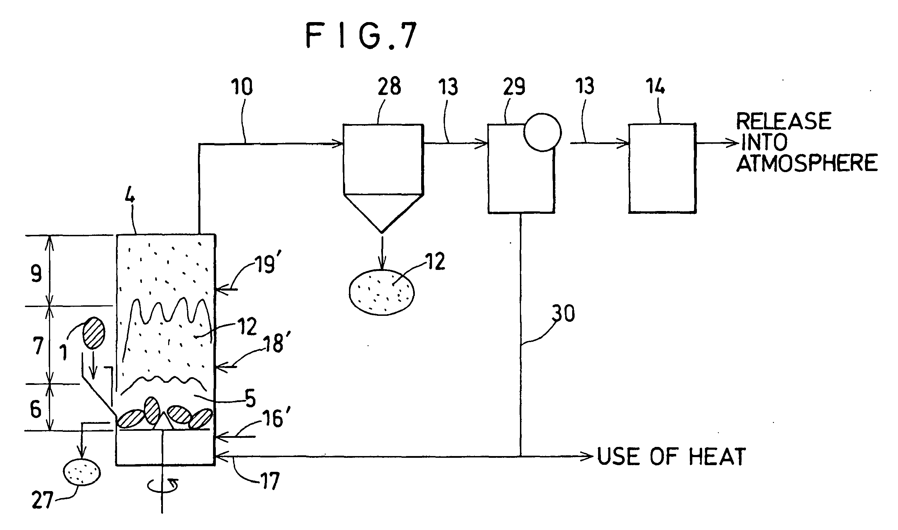

Fig. 7 is a schematic diagram illustrating an exemplary industrial-scale process using the system of Fig. 1. This process is operated as follows.
1. Scrap tires used as organic waste 1 are cut into about 10 cm cubes and fed to a gasification/combustion furnace 4.
2. In the gasification section 6 of gasification/combustion furnace 4 to which air or oxygen-enriched air 16' and steam 17 are supplied, a portion of organic waste (scrap tires) 1 is burned to evolve heat and thereby raise the internal temperature to 700°C or above.
3. A combustible gas 5 containing CO, H₂, CH₄ and high- molecular hydrocarbon compounds such as tar is produced from organic waste (scrap tires) 1. The remainder is withdrawn as inorganic ash 27.
4. In its combustion section 7 to which air or oxygen- enriched air 18' is supplied, the combustible gas 5 produced in gasification section 6 is partially burned at 1 500°C in an oxygen-deficient environment containing less than a stoichiometric amount of oxygen to form carbon black 12.
5. In its quenching section 9, the combustion gas containing carbon black 12 is quenched to 500°C by the addition of water 19' to stop the reactions.
6. The carbon black-containing combustion gas 10 so produced is conveyed to a bag filter 28 where carbon black 12 is collected. This carbon black 12 is suitably granulated and dried to yield a product.
7. Since combustible components remain in the combustion exhaust gas 13 from which carbon black 12 has been separated, this combustion exhaust gas 13 is burned in a boiler 29 to generate steam 30.
8. A portion of steam 30 is used as a part of steam 17 supplied to gasification section 6 and the remainder is utilized as a heat source.
9. The combustion exhaust gas 13 whose combustible components have been burned in boiler 29 is treated in an exhaust gas treating apparatus 14 as required. The resulting pollution-free exhaust gas is discharged into the atmosphere.

### (Example 3)

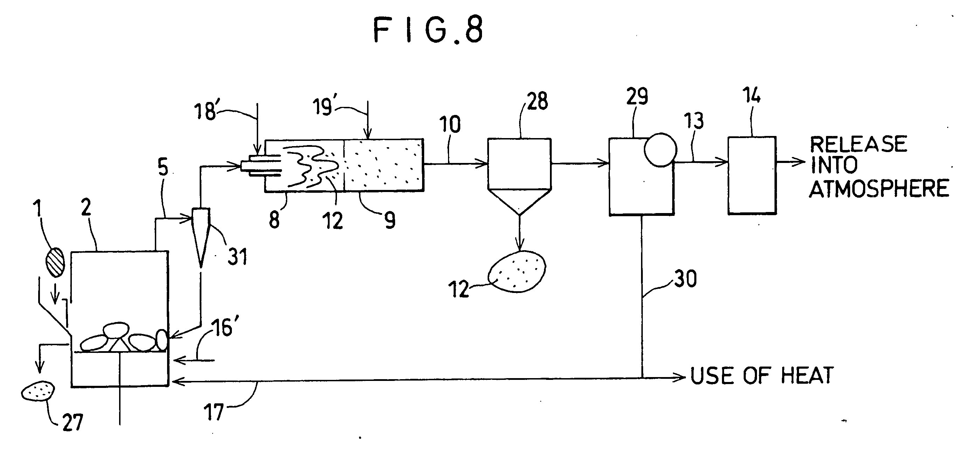

Fig. 8 is a schematic diagram illustrating an exemplary industrial-scale process using the system of Fig. 2. In this process, a cyclone 31 is installed between a gasification furnace 2 and a combustion furnace 8 provided with a quenching section 9 in order to remove coarse particles from the combustible gas. This process is operated as follows.
1. Scrap tires used as organic waste 1 are cut into about 10 cm cubes and fed to gasification furnace 2.
2. In gasification furnace 2 to which air or oxygen- enriched air 16' and steam 17 are supplied, a portion of organic waste (scrap tires) 1 is burned to evolve heat and thereby raise the internal temperature to 700°C or above.
3. A combustible gas 5 containing CO, H₂, CH₄, aromatic compounds, such as benzene and toluene, and high-molecular hydrocarbon compounds such as tar is produced from organic waste (scrap tires) 1. The remainder is withdrawn as inorganic ash 27.
4. Dust is removed from combustible gas 5 by means of cyclone 31. Then, in combustion furnace 8 to which air or oxygen-enriched air 18' is supplied, combustible gas 5 is partially burned at 1 500°C in an oxygen-deficient environment containing less than a stoichiometric amount of oxygen, preferably at an oxygen/carbon ratio of 0.1-0.5, to form carbon black 12. If the oxygen-carbon ratio is less than 0.1, combustible gas 5 cannot be burned, while if it is greater than 0.5, the yield of carbon black is reduced.
5. In its quenching section 9, the combustion gas containing carbon black 12 is quenched to 500°C by the addition of water 19' to stop the reactions.
6. The carbon black-containing combustion gas 10 so produced is conveyed to a bag filter 28 where carbon black 12 is collected. This carbon black 12 is suitably granulated and dried to yield a product.
7. Since combustible components remain in the combustion exhaust gas 13 from which carbon black 12 has been separated, this combustion exhaust gas 13 is burned in a boiler 29 to generate steam 30.
8. A portion of steam 30 is used as a part of steam 17 supplied to gasification section 6 and the remainder is utilized as a heat source.
9. The combustion exhaust gas 13 whose combustible components have been burned in boiler 29 is treated in an exhaust gas treating apparatus 14 as required. The resulting pollution-free exhaust gas is discharged into the atmosphere.

### (Example 4)

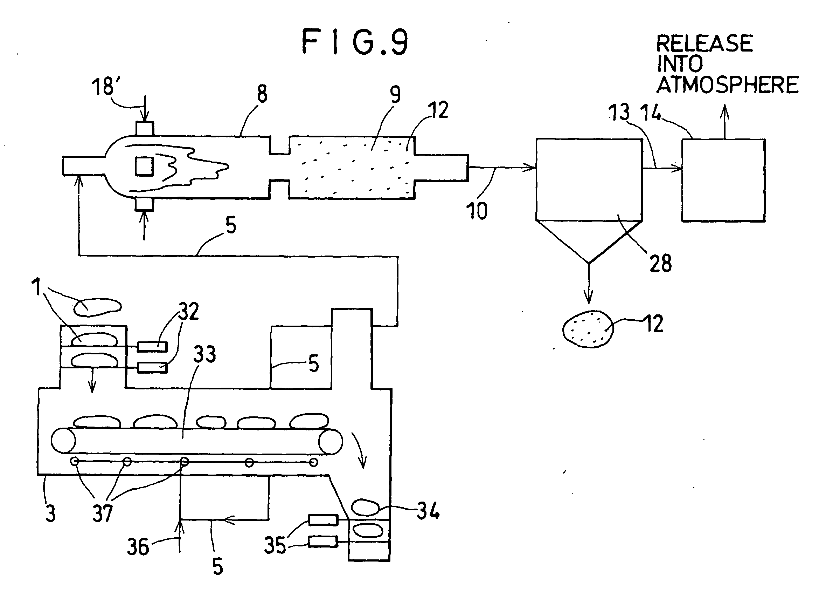

Fig. 9 is a schematic diagram illustrating an exemplary industrial-scale process using the system of Fig. 3. In this process, a pyrolysis furnace 3 is used as the means of gasification. This process is operated as follows.
1. Scrap tires used as organic waste 1 are cut into about 10 cm cubes and fed to pyrolysis furnace 3 by way of double dampers 32.
2. Within pyrolysis furnace 3 having a temperature of 600°C, scrap tires are pyrolyzed while traveling on a stoker 33. The residue is withdrawn by way of double dampers 34.
3. A portion of the resulting combustible gas (pyrolytic gas) 5 consisting largely of light oils such as benzene, toluene, xylene and styrene is mixed with air 36 and burned with burners for the purpose of heating pyrolysis furnace 3.
4. The remainder of combustible gas (pyrolytic gas) 5 is introduced into a combustion furnace 8 to which air 18" is supplied, and partially burned at 1 000-1 500°C in an oxygen-deficient environment containing less than a stoichiometric amount of oxygen, preferably at an oxygen/carbon ratio of 0.1-0.5, to form carbon black 12. If the oxygen-carbon ratio is less than 0.1, combustible gas 5 cannot be burned, while if it is greater than 0.5, most of combustible gas 5 is burned, resulting in a reduced yield of carbon black.
5. In its quenching section 9, the combustion gas containing carbon black 12 is quenched to 500°C by the addition of water to stop the reactions.
6. The carbon black-containing combustion gas 10 so produced is conveyed to a bag filter 28 where carbon black 12 is collected. This carbon black 12 is suitably granulated and dried to yield a product.
7. The combustion exhaust gas 13 from which carbon black 12 has been separated is treated in an exhaust gas treating apparatus 14 as required. The resulting pollution-free exhaust gas is discharged into the atmosphere.

## Claims

1. Process for the production of carbon black from organic waste such as scrap tires and waste plastic which comprises the steps of:
partially burning and gasifying the organic waste in a gaseous mixture of an oxygen-containing gas and steam with an equivalent ratio of oxygen to carbon being 1 or less, particularly 0.1 to 0.5, at a temperature of 500 to 1000°C;
partially burning the resulting combustible gas at a temperature of 1,000°C or above in an oxygen-deficient environment containing less than the stoichiometric amount of oxygen required for combustion, preferably at an oxygen to carbon ratio of 0.1- 0.5, to thereby dehydrogenate and mutually polycondense any hydrocarbons and to form carbon black;
quenching the resulting partial combustion gas having a temperature of 1,000°C or above to a temperature of 700 to 200°C in an inert atmosphere, and
separating and collecting the carbon black from the carbon black-containing reaction gas.

2. Process for the production of carbon black from organic waste such as scrap tires and waste plastic which comprises the steps of:
pyrolyzing and gasifying the organic waste at a temperature of 500°C or above, particularly at a temperature of 500 to 900°C, in an oxygen-free environment.
partially burning the resulting combustible gas at a temperature of 1,000°C or above in an oxygen-deficient environment containing less than the stoichiometric amount of oxygen required for combustion, preferably at an oxygen to carbon ratio of 0.1 - 0.5, to thereby dehydrogenate and mutually polycondense any hydrocarbons and to form carbon black;
quenching the resulting partial combustion gas having a temperature of 1,000°C or above to a temperature of 700 to 200°C in an inert atmosphere, and
separating and collecting the carbon black from the carbon black-containing reaction gas.

## Patentansprüche

1. Verfahren zur Herstellung von Ruß bzw. Carbon Black aus organischem Abfall wie Abfallreifen und Abfall-Kunststoffen, das die nachfolgenden Schritte umfasst:
Teilverbrennen und Vergasung des organischen Abfalls in einer Gasmischung aus Sauerstoff enthaltendem Gas und Dampf mit einem äquivalenten Verhältnis von Sauerstoff zu Kohlenstoff von 1 oder weniger, insbesondere von 0,1 bis 0,5, bei einer Temperatur von 500 bis 1000°C;
Teilverbrennen des sich ergebenden brennbaren Gases bei einer Temperatur von 1000°C oder mehr in einer sauerstoff-defizitären Umgebung, die weniger als die stöchiometrische Menge von für die Verbrennung erforderlichem Sauerstoff enthält, vorzugsweise bei einem Verhältnis von Sauerstoff zu Kohlenstoff von 0,1 bis 0,5, um **dadurch** jegliche Kohlenwasserstoffe zu dehydrieren und gegenseitig zu poly-kondensieren und Ruß zu bilden;
Quenchen des resultierenden teilverbrannten Gases mit einer Temperatur von 1000°C oder darüber auf eine Temperatur von 700 bis 200°C in einer inerten Atmosphäre, und
Abscheiden und Auffangen des Rußes aus dem den Ruß enthaltenden Reaktionsgas.

2. Verfahren zur Herstellung von Ruß bzw. Carbon Black aus organischem Abfall wie Abfallreifen und Abfall-Kunststoffen, das die nachfolgenden Schritte umfasst:
Pyrolisieren und Vergasen des organischen Abfalls bei einer Temperatur von 500°C oder mehr, insbesondere bei einer Temperatur von 500 bis 900°C, in einer sauerstoff-freien Atmosphäre;
Teilverbrennen des resultierenden brennbaren Gases bei einer Temperatur von 1000°C oder darüber in einer sauerstoff-defizitären Umgebung, die weniger als die stöchiometrische Menge an für die Verbrennung erforderlichen Sauerstoff enthält, vorzugsweise bei einem Verhältnis von Sauerstoff zu Kohlenstoff von 0,1 bis 0,5, um **dadurch** jegliche Kohlenwasserstoffe zu dehydrieren und gegenseitig zu poly-kondensieren und Ruß zu bilden;
Quenchen des sich ergebenden teilweise verbrannten Gases mit einer Temperatur von 1000°C oder darüber auf eine Temperatur von 700 bis 200°C in einer inerten Atmosphäre, und
Abscheiden und Auffangen des Rußes aus dem den Ruß enthaltenden Reaktionsgas.

## Revendications

1. Procédé de production de noir de carbone à partir d'un déchet organique tel que des débris de pneu et des déchets plastiques, qui comprend les étapes consistant à :
brûler partiellement et gazéifier le déchet organique dans un mélange gazeux d'un gaz contenant de l'oxygène et de vapeur d'eau dans un rapport d'équivalents de l'oxygène au carbone de 1 ou moins, en particulier de 0,1 à 0,5, à une température de 500 à 1 000 °C ;
brûler partiellement le gaz combustible résultant à une température de 1 000 °C ou plus dans un environnement pauvre en oxygène contenant une quantité inférieure à la quantité stoechiométrique d'oxygène que celle nécessaire à la combustion, de préférence dans un rapport de l'oxygène au carbone de 0,1 à 0,5, afin de déshydrogéner et de polycondenser mutuellement tout hydrocarbure et de former du noir de carbone ;
tremper le gaz de combustion partiel résultant ayant une température de 1 000 °C ou plus à une température de 700 à 200 °C dans une atmosphère inerte ; et
séparer et récupérer le noir de carbone du gaz de réaction contenant du noir de carbone.

2. Procédé de production de noir de carbone à partir d'un déchet organique tel que des débris de pneu et des déchets plastiques, qui comprend les étapes consistant à :
pyrolyser et gazéifier le déchet organique à une température de 500 °C ou plus, en particulier à une température de 500 à 900 °C, dans un environnement dépourvu d'oxygène ;
brûler partiellement le gaz combustible résultant à une température de 1 000 °C ou plus dans un environnement pauvre en oxygène contenant une quantité inférieure à la quantité stoechiométrique d'oxygène que celle nécessaire à la combustion, de préférence dans un rapport de l'oxygène au carbone de 0,1 à 0,5, afin de déshydrogéner et de polycondenser mutuellement tout hydrocarbure et de former du noir de carbone ;
tremper le gaz de combustion partiel résultant ayant une température de 1 000 °C ou plus à une température de 700 à 200 °C dans une atmosphère inerte ; et
séparer et récupérer le noir de carbone du gaz de réaction contenant du noir de carbone.
